# EUROPÄISCHE PATENTSCHRIFT

(11) **EP 1 466 722 B1**
(45) Veröffentlichungstag und Bekanntmachung des Hinweises auf die Patenterteilung: **10.05.2006**
(21) Anmeldenummer: 04006802.5
(22) Anmeldetag: 22.03.2004
(51) Int. Cl.: B32B 15/04, F16J 15/12

(54) **Dichtung für Flanschverbindungen**
Gasket for a Flange Joint
Joint pour raccord à brides

(30) Priorität: 08.04.2003 DE 10316262
(43) Veröffentlichungstag der Anmeldung: 13.10.2004
(73) Patentinhaber: SGL CARBON AG, 65203 Wiesbaden (DE)
(72) Erfinder: Notter, Wolfgang, 45257 Essen (DE); Baumann, Alois, 86641 Rain (DE); Öttinger, Oswin, Dr., 86405 Meitingen (DE); Leinfelder, Heiko, 86720 Nördlingen (DE); Reinthaler, Martin, 86356 Neusäss (DE); Mechen, Silvia, 86405 Meitingen (DE); Bacher, Jürgen, 86637 Wertingen (DE)

(56) Entgegenhaltungen:
- EP-A- 0 616 884
- EP-A- 0 935 085
- US-B1- 6 258 457

## Beschreibung

Die Erfindung betrifft eine Dichtung mit Bördelung für Flanschverbindungen mit einer Leckagerate unterhalb des Grenzwertes, der in der "Technischen Anleitung zur Reinhaltung der Luft" vorgeschrieben ist.

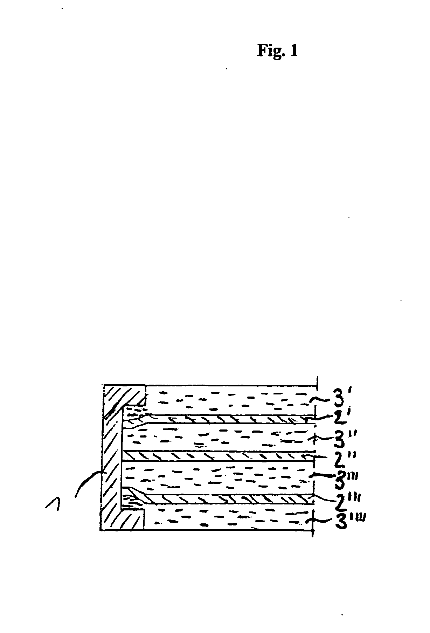

Die Verwendung von Dichtungen aus Graphitfolie oder aus Graphitfolie enthaltenden Schichtverbundwerkstoffen, beispielsweise in Rohrleitungen und Apparaten in der chemischen Industrie und Dampfleitungen in Kraftwerken und in Heizungsanlagen, ist Stand der Technik. Graphitfolie wird hergestellt durch thermische Expansion einer Graphitintercalationsverbindung und anschließende Verdichtung der durch die Expansion erhaltenen ziehharmonikaförmigen Partikel. Diese Partikel werden beim Verdichten unter Druck so miteinander verzahnt, dass daraus ohne Zusatz von Bindern stabile, flexible flächige Gebilde wie Folien oder Platten hergestellt werden können. Graphitfolie zeichnet sich aus durch Beständigkeit gegen hohe Temperaturen und aggressive Medien, relativ geringe Durchlässigkeit für Fluide, hohe Kompressiblität, gutes Rückfederungsvermögen und eine sehr geringe Kriechneigung unter Druck. Diese Eigenschaften begründen die Eignung von Graphitfolie als Dichtungsmaterial.
Die mechanische Stabilität von Dichtungen aus Graphit lässt sich durch die Einbettung von Verstärkungseinlagen aus Metall (Blech oder Folie) zwischen zwei Graphitfolien vergrößern. Daher werden für Dichtungen nach dem Stand der Technik bei einer Gesamtdicke von 1 bis 4 mm meist Schichtverbundwerkstoffe aus mehreren nur einige hundert µm starken Graphitfolien, zwischen denen Metalleinlagen eingebettet sind, verwendet.
Ein Verfahren für die Herstellung von Schichtverbundwerkstoffen aus mehreren alternierenden Metall- und Graphitschichten ist aus der Europäischen Patentschrift EP 0 616 884 bekannt. Zwischen den Metall- und den Graphitschichten wird ein unlösbarer klebstofffreier Verbund hergestellt, indem eine grenzflächenaktive Substanz aus der Gruppe der siliciumorganischen Verbindungen, der perfluorierten Verbindungen oder der Metallseifen in dünner Schicht auf mindestens eine der zu verbindenden Oberflächen aufgetragen wird, und die zu verbindenden Oberflächen anschließend in Kontakt gebracht und durch Druck- und Wärmeeinwirkung miteinander verbunden werden.
Im Beispiel 4 dieser Patentschrift ist ein typischer Aufbau eines derartigen Schichtverbundwerkstoffs beschrieben. Der Schichtverbund besteht aus vier Lagen Graphitfolie mit einer Stärke von je 0,25 mm und drei Lagen Aluminiumblech mit einer Stärke von je 0,05 mm, wobei jedes Blech zwischen zwei Graphitfolien eingebettet ist, so dass sich eine alternierende Schichtfolge ergibt.
Die Leckagerate derartiger Schichtverbund-Dichtungen für Flanschverbindungen lässt sich deutlich verringern, wenn der innere oder/und der äußere Umfang der kreisringförmigen Dichtung mit einem Bördel 1 umfasst wird. Der Querschnitt einer solchen Dichtung, bestehend aus vier Graphitfolien 3' , 3", 3"' und 3"" gleicher Dicke und zwischen je zwei Graphitfolien eingebetteten Metallfolien 2' , 2" und 2''' ist in Figur 1 dargestellt. Der Bördel 1 umgreift alle Schichten des Schichtverbunds. Der Bördel wirkt als Diffusionssperre. Unter dem Bördel wird der Graphit besonders stark verdichtet, so dass ein weitgehend fluiddichter Abschluss zwischen Bördel 1 und der äußeren Graphitschicht 3' bzw 3''' erreicht wird.
Nach diesem Prinzip aufgebaute Dichtungen, die hohen Anforderungen in Bezug auf Fluiddichtigkeit genügen, sind beispielsweise unter dem Namen ® SIGRAFLEX Hochdruck kommerziell erhältlich (siehe Firmenprospekt ® SIGRAFLEX Hochdruck der SGL CARBON Group). Diese Dichtungen bestehen aus mehreren aufeinander liegenden Graphitfolien gleicher Dicke, zwischen denen Verstärkungseinlagen aus Metallfolie eingebettet sind. Der innere oder/und der äußere Umfang des typischerweise kreisringförmigen Dichtungskörpers ist von einem Bördel umfasst, der alle Schichten des Schichtverbundes umgreift. Beispielsweise besteht eine Dichtung mit einer Dicke von 2 mm, die für die Abdichtung von in Europa gebräuchlichen Standard-Flanschverbindungen geeignet ist, aus vier Schichten Graphitfolie mit einer Stärke von je 0,5 mm, zwischen denen drei Schichten Edelstahlfolie mit einer Stärke von je 0,05 mm eingebettet sind. Die Dichtung ist mit Edelstahlbördeln ausgestattet. Die Gasdurchlässigkeit von Dichtungen aus diesem insgesamt sieben Schichten umfassenden Schichtverbundwerkstoff ist mit 0,9* 10⁻⁵ kPa*1(/s*m) (gemessen entsprechend der VDI-Richtlinie 2440) sehr gering. Diese Leckagerate unterschreitet den von der Technischen Anleitung zur Reinhaltung der Luft (TA Luft) vom 24.7.2002 für Flanschverbindungen vorgeschriebenen Grenzwert von 10⁻⁵ kPa*1/(s*m). Die Einhaltung dieses Grenzwertes ist nachzuweisen durch eine Prüfung entsprechend der VDI-Richtlinie 2440, d.h. die Leckagemessung erfolgt bei Raumtemperatur mittels Helium-Massenspektroskopie bei 1 bar Helium-Differenzdruck und einer Flächenpressung von 30 MPa.
Es sind auch nach dem vorstehend beschriebenen Prinzip aufgebaute Dichtungen mit größerer Dicke bekannt. Eine Dichtung mit einer Dicke von 4 mm umfasst beispielsweise acht Lagen Graphitfolie gleicher Dicke und sieben eingebettete Metallfolien, d.h. der Schichtverbund besteht aus insgesamt 15 Schichten.
Aus Gründen der Arbeits- und Betriebssicherheit von Anlagen und des Umweltschutzes, insbesondere im Zusammenhang mit der Einführung der im Jahr 2002 neu gefassten TA Luft, besteht in der Industrie ein wachsender Bedarf an Dichtungen, welche die Einhaltung niedriger Leckageraten ermöglichen.

Die Aufgabe der vorliegenden Erfindung besteht darin, eine Dichtung für Flanschverbindungen bereit zu stellen, die mit einem gegenüber dem Stand der Technik verbesserten Aufbau, d.h. mit einem reduzierten Anteil an hochreiner aschearmer Graphitfolie oder/und einer geringeren Anzahl von Metalleinlagen bei gleichbleibender Dicke, die Anforderungen aus der TA Luft erfüllt, d.h. bei einer Flächenpressung von 30 MPa und einem Helium-Differenzdruck von 1 bar eine Leckagerate von weniger als 10⁻⁵ kPa*1/(s*m) aufweist.
Diese Aufgabe wird gelöst durch den im Hauptanspruch genannten Aufbau der Dichtung. Die Unteransprüche geben weitere vorteilhafte Merkmale und Ausführungsformen der erfindungsgemäßen Dichtung an.
Weitere Merkmale, Einzelheiten und Vorteile der erfindungsgemäßen Dichtung ergeben sich aus der nachstehenden Beschreibung, den Figuren und dem Ausführungsbeispiel.

Die Figuren zeigen:
- Figur 1: einen Querschnitt durch eine Flanschdichtung mit Bördel nach dem Stand der Technik
- Figur 2: einen Querschnitt durch eine erfindungsgemäße Flanschdichtung mit Bördel
- Figur 3: einen Querschnitt durch eine weitere Ausführungsform der erfindungsgemäßen Flanschdichtung mit Bördel

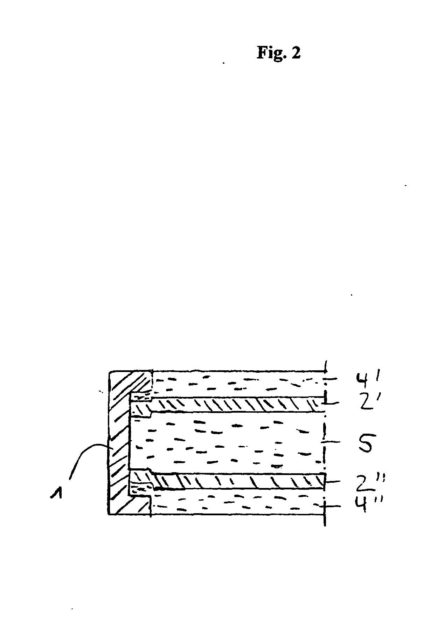

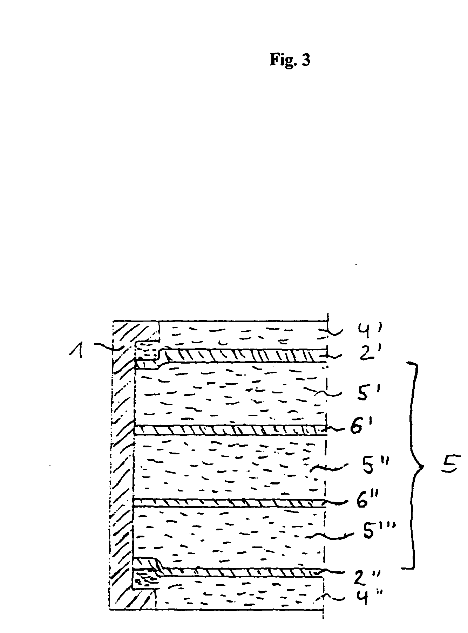

Figur 2 zeigt den Querschnitt der erfindungsgemäßen Dichtung. Die erfindungsgemäße Dichtung enthält einen flächigen dicken druckfesten inneren Kern 5 aus mindestens einer Lage Graphitfolie, der zwischen zwei Metallfolien 2', 2" , die keine Durchbrechungen aufweisen, eingebettet ist. Die dem Kern abgewandten Oberflächen der Metallfolien sind mit im Vergleich zum Kern dünnen Auflageschichten 4', 4" aus Graphitfolie bedeckt. Der innere Umfang des typischerweise kreisringförmigen Dichtungskörpers, der an den abzudichtenden Hohlraum angrenzt, ist mit einem Bördel 1 umfasst. Der Bördel 1 umgreift alle Schichten des Schichtverbundwerkstoffs, aus dem die Dichtung besteht. Zusätzlich zu diesem Innenbördel kann auch ein Außenbördel vorgesehen sein (in Figur 2 nicht dargestellt). Durch den zusätzlichen Außenbördel wird die Ausblassicherheit der Dichtung erhöht.
Entscheidend für die Funktion der erfindungsgemäßen Dichtung ist, dass das Verhältnis des Flächengewichtes der Graphitfolie, aus der die Auflageschichten bestehen, zum Flächengewicht der Graphitfolie, aus der der Kern besteht, zwischen 1:3 und 1:7 liegt. Das Flächengewicht (in g/m²) ist das Produkt aus der Dicke (in m) und der Dichte (in g/m³) der Graphitfolie. Die Flächengewichte der Schichten werden entsprechend den unterschiedlichen Funktionen, die diese Schichten in dem erfindungsgemäßen Schichtverbund erfüllen, ausgewählt.
Die Funktion der äußeren Auflageschichten aus Graphitfolie besteht darin, sich dichtend an die Flansche anzupassen und mit dem Bördel einen fluiddichten Abschluss zu bilden, so dass die Entstehung von Leckagepfaden weitgehend verhindert wird. Der unter dem Bördel liegende Bereich der Auflageschicht wird besonders stark verpresst, so dass die Fluiddurchlässigkeit des Graphits in diesem Bereich deutlich vemindert ist. Die Leckagerate ist um so geringer, je kleiner das Flächengewicht der Graphitfolie in der Auflageschicht ist. Für die Auflageschichten der erfindungsgemäße Dichtung werden daher Graphitfolien mit einem Flächengewicht von höchstens 350 g/m² und bevorzugt 150 bis 250 g/m² verwendet. Nach dem Stand der Technik kann Graphitfolie mit einer Dichte von mindestens 0,7 g/cm³ hergestellt werden, damit resultiert bei einem maximalen Flächengewicht vom 350 g/m² eine maximale Dicke der Auflageschicht von 0,5 mm. Es ist jedoch wünschenswert, die Auflageschichten aus Graphitfolie möglichst dünn auszubilden, so dass eindiffundierte Partikel möglichst schnell auf Metallfolie, die eine schwer passierbare Diffusionsbarriere darstellt, stoßen. Daher sind die Auflageschichten in den besonders bevorzugten Ausführungsformen zwischen 0,15 und 0,35 mm dick. Die Mindestdicke der Auflageschichten wird von ihrer Funktion bestimmt, sich dichtend an die Flansche anzupassen und deren Rauhigkeiten zu kompensieren. Typische Rauhigkeiten von Stahlflanschen betragen maximal Rz = 80 bis 90 µm. Eine Auflageschicht mit einer Mindestdicke von 0,15 mm ist daher ausreichend, um die Rauhigkeiten der Flanschoberfläche zu kompensieren.
Die äußeren Auflageschichten stehen in Kontakt mit den den abzudichtenden Raum durchströmenden Medien, daher müssen sie aus besonders reiner und daher chemisch beständiger Graphitfolie mit einem Aschewert (bestimmt nach der DIN 51903) von höchstens 1 % (entspricht einem massebezogenen Graphitgehalt von mindestens 99 %) gefertigt werden. Die Verwendung von hochreiner aschearmer Graphitfolie in den Auflageschichten ist weiterhin notwendig, um die Gefahr der Korrosion der Flansche durch die Verunreinigungen zu verringern. Wegen der Notwendigkeit, die Auflageschichten aus besonders reiner Graphitfolie herzustellen, ist auch aus ökonomischen Gründen eine Reduktion der Dicke der Auflageschichten im Vergleich zum Kern vorteilhaft.
Die Funktion des Kerns in dem erfindungsgemäßen Schichtverbund besteht darin, die Erfüllung der mechanischen Anforderungen an die Dichtung, d.h. ausreichende Kompressiblität und Rückfederung, zu gewährleisten, und der Dichtung die für die Ausfüllung des Raumes zwischen den Flanschen nötige Dicke zu verleihen. Eine ausreichende Druckfestigkeit des Kerns ist gegeben, wenn das Flächengewicht der Graphitfolie im Kern der Dichtung 1500 g/m² nicht überschreitet. Bevorzugt werden für den Kern Graphitfolien mit einem Flächengewicht zwischen 600 und 1200 g/m² und einer Dichte zwischen 0,7 und 1,3 g/cm³ verwendet.
Zu den den abzudichtenden Raum durchströmenden Medien hat der Kern 5 der erfindungsgemäßen Dichtung keinen Kontakt, denn seine Oberflächen sind durch die Metallfolien 2', 2'' und seine dem abzudichtenden Hohlraum zugewandte Kante ist durch den Bördel 1 abgeschlossen. Daher müssen an den Graphitkem 5 keine hohen Anforderungen hinsichtlich Undurchlässigkeit und chemischer Beständigkeit gestellt werden. So kann der Kern ökonomisch vorteilhaft aus Graphitfolie hergestellt werden, die im Vergleich zu den für die Auflageschichten verwendeten Folien weniger rein ist, jedoch den mechanischen Anforderungen an die Dichtung entspricht. Geeignet ist Graphitfolie mit einem Graphitgehalt von > 96 %, d.h. einem massebezogenen Aschewert von < 4 %.
Die geringen Anforderungen an die Medienundurchlässigkeit des Kernes erlauben es, dass im Inneren des erfindungsgemäßen Schichtverbundes eine relativ dicke Graphitschicht ohne zusätzliche Diffusionsbarriere aus Metall vorliegt. Die Dicke des Kerns hängt ab von der die für die Abdichtung der Flanschverbindung nötigen Gesamtdicke der Dichtung. Für in Europa gebräuchliche Flanschverbindungen werden üblicherweise Dichtungen mit einer Dicke von 2 mm benötigt, für in den USA gebräuchliche Flanschverbindungen Dichtungen mit einer Dicke von 1,6 mm.
Dichtungen mit einem Kern der dicker als 1,5 mm ist, können entsprechend der vorliegenden Erfindung besonders vorteilhaft ausgebildet werden, indem der Kern aus mindestens zwei Lagen Graphitfolie mit einem Flächengewicht von jeweils maximal 1500 g/m² aufgebaut ist, wobei zwischen den einzelnen Lagen Graphitfolie jeweils eine Metalleinlage eingebettet wird. Die Metalleinlagen, die zwischen den Lagen Graphitfolie des Kerns eingebettet sind, können auch als Spießblech oder Streckmetallblech ausgebildet sein, denn sie müssen, da der Kern von den Metallfolien an seinen beiden Oberflächen und dem Bördel komplett umschlossen ist, nicht als Diffusionsbarriere wirken. Unter dem Begriff Metalleinlagen, die zwischen den Graphitfolieschichten des Kerns eingebettet sind, sollen daher sowohl von Durchbrechungen freie Metallfolien als auch Spießbleche oder Streckmetallbleche verstanden werden. Entscheidend für die Funktion der erfindungsgemäßen Dichtung mit einem mehrere Lagen Graphitfolie umfassenden Kern ist wiederum, dass das Flächengewicht der Graphitfolie, aus der die Auflageschichten bestehen, kleiner als 350 g/m² ist, dass das Flächengewicht der Graphitfolie, aus der die Lagen im Kern bestehen, kleiner als 1500 g/m² ist und dass das Verhältnis des Flächengewichtes der Graphitfolie, aus der die Auflageschichten bestehen, zum Flächengewicht der Graphitfolie, aus der die Lagen im Kern bestehen, zwischen 1:3 und 1:7 liegt.
Beispielsweise weist eine erfindungsgemäße Dichtung von 4 mm Dicke den folgenden Schichtaufbau auf: eine Auflageschicht 4' aus Graphitfolie von 0,25 mm Dicke, eine Metallfolie 2' von 0,05 mm Dicke als Diffusionsbarriere, ein Kern 5 umfassend drei Graphitfolien 5', 5",5"'von je 1,1 mm Dicke, zwischen denen jeweils zur Verstärkung Metallfolien, Spießbleche oder Streckmetallbleche 6' , 6" der Dicke 0,05 mm eingebettet sind, eine weitere Metallfolie 2" der Stärke 0,05 mm als Diffusionsbarriere und eine Auflageschicht 4" aus Graphitfolie der Stärke 0,25 mm. Die Dichte der Graphitfolien 5' , 5" , 5''' im Kern und in den Auflageschichten 4', 4" beträgt jeweils 1 g/cm³. Figur 3 zeigt eine schematische Darstellung des Querschnitts dieses Schichtaufbaus, wobei zwischen den Graphitfolien 5', 5", 5"' des Kerns 5 Metallfolien 6, 6"eingebettet sind. Alle Schichten werden von einem Bördel 1 umfasst.
Die Trennung der Funktionen Medienbeständigkeit und Abdichtung gegen Fluide im Zusammenwirken mit dem Bördel und den Flanschen einerseits sowie Kompressiblität, Rückfederungsvermögen und Raumausfüllung andererseits zwischen den Auflageschichten und dem Kern des erfindungsgemäßen Schichtverbundes ermöglicht es, den Anteil des hochreinen aschearmen Graphits zu reduzieren und die Anzahl der als Diffusionsbarrieren benötigten Zwischenschichten aus Metall, bezogen auf die Dicke der Graphitschicht, zu reduzieren, ohne dass die Leckagerate der Dichtung ansteigt.
Die Funktionen der Metallfolien, die zwischen Kern und Auflageschicht eingebettet sind, besteht neben der Wirkung als innere Diffusionsbarriere darin, den Schichtverbund mechanisch zu verstärken. Typischerweise werden Metallfolien oder -bleche aus Edelstahl, Stahl, Eisen, Aluminium, Nickel, Kupfer, Titan oder Zink oder Legierungen von Nickel, Kupfer, Aluminium oder Zink verwendet. Die Dicke der Metalleinlagen liegt zwischen 0,02 und 1 mm, bevorzugt 0,02 bis 0,2 mm.
Bei Verwendung eines mehrschichtigen Kerns können die Metalleinlagen 6', 6" ..., die sich zwischen den einzelnen Lagen Graphitfolie 5', 5"... im Kern befinden, auch als Spießblech oder Streckmetallblech ausgebildet werden, denn sie müssen nicht als Diffusionsbarriere wirken. Entscheidend für die Funktion der erfindungsgemäßen Dichtung ist, dass beide Oberflächen des flächigen, ggf. mehrschichtigen Kerns durch eine von Durchbrechungen freie, als Diffusionsbarriere wirkende Metallfolie 2', 2" bedeckt sind.
Die Herstellung der Graphitfolie für den Kern und die Auflageschichten der erfindungsgemäßen Dichtung geschieht in bekannter Weise durch thermische Expansion einer Graphitintercalationsbverbindung, beispielsweise eines Graphitsalzes wie Graphithydrogensulfat oder Graphitnitrat, und anschließendes Verdichten des Expandates ohne Binderzusatz unter Druck zu einem flächigen Gebilde.
Die Herstellung des erfindungsgemäßen Schichtverbunds erfolgt vorzugsweise nach dem in der EP 0 61 6 884 B beschriebenen Verfahren. Der Vorteil dieses Verfahrens besteht darin, dass für die Herstellung einer unlösbaren Verbindung zwischen den Schichten keine herkömmlichen Klebemittel, die der Alterung, Erweichung und/oder chemischen oder thermischen Zersetzung unterliegen, benötigt werden. Stattdessen werden zur Verbindung der Metall- und Graphitfolien haftvermittelnde Substanzen aus der Gruppe der grenzflächenaktiven Substanzen, z.B. siliciumorganische Verbindungen, Metallseifen oder perfluorierte Verbindungen verwendet. Diese bewirken bereits bei extrem dünner Auftragung, d.h. nur wenigen nm Schichtdicke auf einer der miteinander zu verbindenden Metall- und Graphitoberflächen die Ausbildung einer unlöslichen Verbindung, wenn die beschichtete Fläche unter Einwirkung vom Druck und Temperatur mit der zu verbindenden Fläche in Kontakt gebracht wird.
Alternativ kann der erfindungsgemäße Schichtverbund auch durch Aufeinanderkleben der einzelnen Schichten mit einem bekannten Klebmittel hergestellt werden, wenn dies die Einsatzbedingungen der Dichtung erlauben.
Die Verbindung zwischen den Graphitfolien des Kerns und dazwischen eingebettetem Spießblech kann in bekannter Weise durch Verpressen hergestellt werden, so dass die hervorstehenden Oberflächenstrukturen des Spießblechs in die Graphitfolie eindringen oder/und der Graphit in die Durchbrechungen des Spießblechs eindringt.
Die Dichtigkeit der äußeren Auflageschichten gegenüber Fluiden lässt sich weiter verbessern, wenn diese in bekannter Weise mit einem Harz imprägniert werden. Geeignete Imprägniermittel sind beispielsweise Furfurylalkohol, das unter Einwirkung eines Härtungskatalysators zu Furanharz kondensiert, Phenolharze, Epoxidharze und Acrylharze.
Die Umbördelung des inneren und ggf. auch des äußeren Umfangs des erfindungsgemäßen Schichtverbundes erfolgt nach bekannten Verfahren. Üblicherweise werden für Dichtungen für Flanschverbindungen Bördel aus Edelstahl mit einer Stärke von 0,15 bis 0,2 mm verwendet. Es wurde jedoch festgestellt, dass Dichtungen aus dem vorstehend beschriebenen Schichtverbund mit Bördeln der Stärke 0,1 mm besonders niedrige Leckageraten aufweisen. Geeignete Bördelmaterialien für die erfindungsgemäße Dichtung sind Chrom-Nickel-Stahl, Nickel, Nickel enthaltende Legierungen, Kupfer und Aluminium.

### Beispiel

Die Leckagerate einer Dichtung mit dem in Tabelle 1 angegebenen Aufbau und einem 0,1 mm starken Innenbördel aus Edelstahl (Werkstoff Nr. 1.4401) wurde entsprechend der VDI-Richtlinie 2440 geprüft.

**Tabelle 1**

| Schicht | Material | Dicke/ Mm | Flächengewicht/ g/m² |
|---|---|---|---|
| Auflageschichten | Graphitfolie Aschewert 0,15 % | 0,25 | 250 |
| Metallfolie | Edelstahl Werkstoff Nr. 1.4401 | 0,05 | - |
| Kern | Graphitfolie Aschewert ≤ 2 % | 1,1 | 1100 |

Für die Messung wurde die Dichtung zwischen DIN-Flanschen DN40 PN40 mit ebener Dichtleiste eingespannt. Die Rauhtiefe der Dichtleisten betrug Rₐ ≤ 6,3 µm. Die Schrauben wurden mit einer Kraft angezogen, die zu einer Flächenpressung von 30 MPa führte. Nach der Montage wurde das verspannte Flanschpaket in einem Ofen 48 Stunden lang bei 300 °C ausgelagert. Nach dem Abkühlen wurde die absolute Leckagerate mit einem Helium-Lecksucher (Massenspektrometer) gemessen bei einem Helium-Differenzdruck von 1 bar.. Zur Ermittlung der spezifischen Leckagerate wurde der mittlere Umfang der wirklich verpressten Dichtfläche herangezogen.
Für die erfindungsgemäße Dichtung wurde eine spezifische Leckagerate von 0,95*10⁻⁵ kPa*l(/s*m). Damit unterschreitet die erfindungsgemäße Dichtung den von der TA Luft vorgeschriebenen Grenzwert von 1*10⁻⁵ kPa*1(/s*m).

### Bezugszeichenliste

- 1: Bördel
- 2',2",2"': Metallfolien
- 3',3",3"',3"": Graphitfolien
- 4', 4": Auflageschichten aus Graphitfolie
- 5: Kern
- 5' 5",5"': Lagen aus Graphitfolien im Kern
- 6', 6": Metallfolien im Kern

## Patentansprüche

1. Dichtung für Flanschverbindungen umfassend einen Schichtverbund aus einem flächigen zwischen zwei Metallfolien (2', 2") eingebetteten Kern (5) aus einer Lage Graphitfolie mit einem Flächengewicht von höchstens 1500 g/m² oder mehreren Lagen Graphitfolie (5', 5"...) mit einem Flächengewicht von jeweils höchstens 1500 g/m² im Wechsel mit Metalleinlagen (6', 6"...), und zwei äußeren Auflageschichten (4', 4") aus Graphitfolie mit einem Flächengewicht von jeweils höchstens 350 g/m², die die vom Kern abgewandten Oberflächen der Metallfolien (2', 2") bedecken, und einem Innenbördel (1), der alle Schichten des Schichtverbunds umgreift,
**dadurch gekennzeichnet, dass**
das Verhältnis des Flächengewichts der Graphitfolie der Auflageschichten zum Flächengewicht der Graphitfolie im Kern zwischen 1:3 und 1:7 liegt.

2. Dichtung nach Anspruch 1, **dadurch gekennzeichnet, dass** die Metalleinlagen (6', 6"...), die zwischen den Lagen aus Graphitfolie (5', 5"...), aus denen der Kern (5) besteht, eingebettet sind, als Spießbleche oder Streckmetallbleche ausgebildet sind.

3. Dichtung nach einem der vorhergehenden Ansprüche, **dadurch gekennzeichnet, dass** das Flächengewicht der Graphitfolie, aus der der Kern (5) besteht, 500 bis 1200 g/m² beträgt und dass das Flächengewicht der Graphitfolie, aus der die Auflageschichten (4', 4") bestehen, 150 bis 250 g/m² beträgt.

4. Dichtung nach einem der vorhergehenden Ansprüche, **dadurch gekennzeichnet, dass** der massebezogene Aschewert der Graphitfolie, aus der der Kern (5) besteht, höchstens 4 % beträgt und dass der massebezogene Aschewert der Graphitfolie, aus der die Auflageschichten (4' , 4") bestehen, höchstens 1 % beträgt.

5. Dichtung nach einem der vorhergehenden Ansprüche, **dadurch gekennzeichnet, dass** der massebezogene Aschewert der Graphitfolie, aus der die Auflageschichten (4', 4") bestehen, höchstens 0,15 % beträgt.

6. Dichtung nach einem der vorhergehenden Ansprüche, **dadurch gekennzeichnet, dass** der massebezogene Aschewert der Graphitfolie, aus der der Kern (5) besteht, höchstens 2 % beträgt.

7. Dichtung nach einem der vorigen Ansprüche, **dadurch gekennzeichnet, dass** die zwischen den Auflageschichten (4', 4") und dem Kern (5) eingebetteten Metallfolien (2', 2'') und die zwischen den Graphitfolien (5', 5"...) des Kerns eingebetteten Metallfolien, Spießbleche oder Streckmetallbleche (6', 6''...) höchstens 1 mm dick sind.

8. Dichtung nach einem der Ansprüche 1 bis 7, **dadurch gekennzeichnet, dass** die zwischen den Auflageschichten (4', 4") und dem Kern (5) eingebetteten Metallfolien (2', 2") und die zwischen den Graphitfolien (5', 5"...) des Kerns eingebetteten Metallfolien, Spießbleche oder Streckmetallbleche (6', 6"...) 0,02 bis 0,2 mm dick sind.

9. Dichtung nach einem der vorherigen Ansprüche, **dadurch gekennzeichnet, dass** die zwischen den Auflageschichten (4', 4") und dem Kern (5) eingebetteten Metallfolien (2', 2") und die zwischen den Graphitfolien (5', 5"...) des Kerns eingebetteten Metallfolien, Spießbleche oder Streckmetallbleche (6', 6" ...) aus Materialien aus der Gruppe Edelstahl, Stahl, Eisen, Aluminium, Nickel, Kupfer, Titan oder Zink oder Legierungen von Nickel, Kupfer, Aluminium oder Zink bestehen.

10. Dichtung nach einem der vorhergehenden Ansprüche, **dadurch gekennzeichnet, dass** die Metallfolien mit den Graphitfolien durch eine grenzflächenaktive haftvermittelnde Substanz aus der Gruppe der siliciumorganische Verbindungen, Metallseifen oder perfluorierten Verbindungen oder durch ein Klebemittel verbunden sind.

11. Dichtung nach einem der vorhergehenden Ansprüche, **dadurch gekennzeichnet, dass** die Auflageschichten (4', 4'')aus Graphitfolie eine Imprägnierung aus Furanharz, Phenolharz, Epoxidharz oder Acrylharz enthalten.

12. Dichtung nach einem der vorhergehenden Ansprüche, **dadurch gekennzeichnet, dass** der äußere Umfang der Dichtung durch einen Außenbördel umfasst wird, der alle Schichten des Schichtverbundes umgreift.

13. Dichtung nach einem der vorherigen Ansprüche, **dadurch gekennzeichnet, dass** die Bördel eine Stärke von höchstens 0,2 mm aufweisen.

14. Dichtung nach einem der Ansprüche 1 bis 13, **dadurch gekennzeichnet, dass** die Bördel eine Stärke von höchstens 0,1 mm aufweisen.

15. Dichtung nach einem der vorhergehenden Ansprüche, **dadurch gekennzeichnet, dass** die Bördel aus einem Material aus der Gruppe Chrom-Nickel-Stahl, Nickel, Nickel-Legierungen , Aluminium und Kupfer bestehen.

16. Dichtung nach dem vorhergehenden Ansprüche; **dadurch gekennzeichnet, dass** die Leckagerate der Dichtung, gemessen entsprechend der VDI-Richtlinie 2440, kleiner als oder gleich 10⁻⁵ kPa*1/(s*m) ist.

## Claims

1. A seal for flanged joints comprising a laminated composite consisting of a plane core (5) embedded between two metal foils (2', 2") and made up of one layer of graphite foil with a weight per unit area of at most 1500 g/m², or several layers of graphite foil (5', 5"...) each with a weight per unit area of at most 1500 g/m², alternating with metal inserts (6', 6"...), and two outer cover layers of graphite foil (4', 4") each with a weight per unit area of at most 350 g/m², covering the surfaces of the metal foils (2', 2") that face away from the core, and an inner bead (1) encompassing all the layers of the laminated composite, **characterized in that** the ratio of the weight per unit area of the graphite foil of the cover layers to the weight per unit area of the graphite foil in the core is between 1:3 and 1:7.

2. A seal according to Claim 1, **characterized in that** the metal inserts (6', 6"...) embedded between the layers of graphite foil (5', 5"...) constituting the core (5) take the form of corrugated punched metal sheets or expanded metal sheets.

3. A seal according to one of the preceding claims, **characterized in that** the weight per unit area of the graphite foil constituting the core (5) is from 500 to 1200 g/m² and **in that** the weight per unit area of the graphite foil constituting the cover layers (4', 4") is from 150 to 250 g/m².

4. A seal according to one of the preceding claims, **characterized in that** the ash content of the graphite foil constituting the core (5) is at most 4 wt.% and **in that** the ash content of the graphite foil constituting the cover layers (4', 4") is at most 1 wt.%.

5. A seal according to one of the preceding claims, **characterized in that** the ash content of the graphite foil constituting the cover layers (4', 4") is at most 0.15 wt.%.

6. A seal according to one of the preceding claims, **characterized in that** the ash content of the graphite foil constituting the core (5) is at most 2 wt.%.

7. A seal according to one of the preceding claims, **characterized in that** the metal foils (2', 2") embedded between the cover layers (4', 4") and the core (5) and the metals foils, corrugated punched metal sheets or expanded metal sheets (6', 6"...) embedded between the graphite foils (5', 5"...) of the core are at most 1 mm thick.

8. A seal according to one of Claims 1 to 7, **characterized in that** the metal foils (2', 2") embedded between the cover layers (4', 4") and the core (5) and the metals foils, corrugated punched metal sheets or expanded metal sheets (6', 6"...) embedded between the graphite foils (5', 5"...) of the core are 0.02 to 0.2 mm thick.

9. A seal according to one of the preceding claims, **characterized in that** the metal foils (2', 2") embedded between the cover layers (4', 4") and the core (5) and the metals foils, corrugated punched metal sheets or expanded metal sheets (6', 6"...) embedded between the graphite foils (5', 5"...) of the core are made of materials from the group comprising stainless steel, steel, iron, aluminium, nickel, copper, titanium and zinc, and alloys of nickel, copper, aluminium or zinc.

10. A seal according to one of the preceding claims, **characterized in that** the metal foils are bonded to the graphite foils by a surface-active adhesion-promoting substance from the group comprising organosilicon compounds, metal soaps and perfluorinated compounds, or by an adhesive.

11. A seal according to one of the preceding claims, **characterized in that** the cover layers of graphite foil (4', 4") are impregnated with furan resin, phenolic resin, epoxy resin or acrylic resin.

12. A seal according to one of the preceding claims, **characterized in that** the outer periphery of the seal is surrounded by an outer bead encompassing all the layers of the laminated composite.

13. A seal according to one of the preceding claims, **characterized in that** the beads have a thickness of at most 0.2 mm.

14. A seal according to one of Claims 1 to 13, **characterized in that** the beads have a thickness of at most 0.1 mm.

15. A seal according to one of the preceding claims, **characterized in that** the beads are made of a material from the group comprising chromium-nickel steel, nickel, nickel alloys, aluminium and copper.

16. A seal according to one of the preceding claims, **characterized in that** the leakage rate of the seal, measured according to VDI Guideline 2440, is less than or equal to 10⁻⁵ kPa·l/(s·m).

## Revendications

1. Joint pour assemblages par brides, comportant un composite stratifié constitué d'un noyau plat (5) inséré entre deux feuilles métalliques (2', 2") et constitué d'une couche de feuille de graphite d'un poids surfacique maximum de 1 500 g/m² ou de plusieurs couches de feuille de graphite (5', 5" ...) chacune d'un poids surfacique maximum de 1 500 g/m², en alternance avec des inserts métalliques (6', 6" ...), et deux couches de couvertures extérieures (4', 4") en feuille de graphite, chacune d'un poids surfacique maximum de 350 g/m², qui recouvrent les surfaces des feuilles métalliques (2', 2") opposées au noyau, et une collerette interne (1) qui enserre toutes les couches du composite stratifié,
**caractérisé en ce que**
le rapport entre le poids surfacique de la feuille de graphite des couches de couverture et celui de la feuille de graphite du noyau est de 1/3 à 1/7.

2. Joint selon la revendication 1,
**caractérisé en ce que**
les inserts métalliques (6', 6"...) disposés entre les couches de feuille de graphite (5', 5" ...) du noyau (5), sont en forme de tôles losangées ou étirées.

3. Joint selon l'une des revendications précédentes,
**caractérisé en ce que**
le poids surfacique de la feuille de graphite du noyau (5) est de 500 à 1 200 g/m² et le poids surfacique de la feuille de graphite des couches de couverture (4', 4") est de 150 à 250 g/m².

4. Joint selon l'une des revendications précédentes,
**caractérisé en ce que**
l'indice de cendres rapporté à la masse, de la feuille de graphite du noyau (5), est au maximum de 4 % et l'indice de cendres rapporté à la masse, de la feuille de graphite des couches de couverture (4', 4") est au maximum de 1 %.

5. Joint selon l'une des revendications précédentes,
**caractérisé en ce que**
l'indice de cendres rapporté à la masse, de la feuille de graphite des couches de couverture (4', 4"), est au maximum de 0,15 %.

6. Joint selon l'une des revendications précédentes,
**caractérisé en ce que**
l'indice de cendres rapporté à la masse, de la feuille de graphite du noyau (5), est au maximum de 2 %.

7. Joint selon l'une des revendications précédentes,
**caractérisé en ce que**
les feuilles métalliques (2', 2") insérées entre les couches de couverture (4', 4") et le noyau (5) et celles insérées entre les feuilles de graphite (5', 5" ...) du noyau, sont des tôles losangées ou étirées (6',6"...) d'une épaisseur maximum de 1 mm.

8. Joint selon l'une des revendications 1 à 7,
**caractérisé en ce que**
les feuilles métalliques (2', 2") insérées entre les couches de couverture (4', 4") et le noyau (5) et celles entre les feuilles de graphite (5', 5" ...) du noyau, sont des tôles losangées ou étirées (6', 6"...) de 0,02 à 0,2 mm d'épaisseur.

9. Joint selon l'une des revendications précédentes,
**caractérisé en ce que**
les feuilles métalliques (2', 2") insérées entre les couches de couverture (4', 4") et la partie centrale (5) et celles entre les feuilles de graphite (5', 5"...) du noyau sont des tôles losangées ou étirées (6', 6"...) en matériaux appartenant au groupe constitué par l'acier spécial, l'acier, le fer, l'aluminium, le nickel, le cuivre, le titane et le zinc ou des alliages de nickel, cuivre, aluminium ou zinc.

10. Joint selon l'une des revendications précédentes,
**caractérisé en ce que**
les feuilles métalliques sont assemblées avec les feuilles de graphite au moyen d'une substance favorisant l'adhérence, tensioactive, appartenant au groupe des composés organiques du silicium, savons métalliques ou composés perfluorés ou au moyen d'un agent adhésif.

11. Joint selon l'une des revendications précédentes,
**caractérisé en ce que**
les couches de couverture (4', 4") en feuille de graphite contiennent une imprégnation de résine furannique, résine phénolique, résine époxyde ou résine acrylique.

12. Joint selon l'une des revendications précédentes,
**caractérisé en ce que**
la périphérie extérieure du joint est entourée par une collerette extérieure qui enserre toutes les couches du composite stratifié.

13. Joint selon l'une des revendications précédentes,
**caractérisé en ce que**
les collerettes ont une épaisseur maximum de 0,2 mm.

14. Joint selon l'une des revendications 1 à 13,
**caractérisé en ce que**
les collerettes ont une épaisseur maximum de 0,1 mm.

15. Joint selon l'une des revendications précédentes,
**caractérisé en ce que**
les collerettes sont constituées d'un matériau appartenant au groupe constitué de l'acier-nickel-chrome, du nickel, des alliages du nickel, de l'aluminium et du cuivre.

16. Joint selon l'une des revendications précédentes,
**caractérisé en ce que**
le taux de fuite du joint, mesuré selon la directive VDI 2440, est inférieur ou égal à 10⁻⁵ kPa*1/(s*m).
